# EUROPEAN PATENT APPLICATION

(11) **EP 4 606 688 A1**
(43) Date of publication of application: **27.08.2025**
(21) Application number: 24873854.4
(22) Date of filing: 14.08.2024
(51) Int. Cl.: B62M 7/12, B62M 6/40

(54) **POWERED REAR SWINGARM DRIVE SYSTEM OF PURE ELECTRIC TWO-WHEELED MOTORCYCLE**

(30) Priority: 12.01.2024 CN 202420083787 U
(71) Applicant: Zhejiang Xin Precision Machinery Co., Ltd., Taizhou, Zhejiang 318000 (CN)
(72) Inventor: YU, Wenyong, Taizhou, Zhejiang 318000 (CN)
(74) Representative: Metida
(86) International application number: PCT/CN2024/111924
(87) International publication number: WO 2025/148311

(57) **Abstract**

Disclosed is a power rear fork driving system for a pure electric two-wheeled motorcycle, including a rear fork fixing base, where one side of the rear fork fixing base is connected to a frame, a power rear fork shell and a supporting rear fork are respectively arranged at both ends of the other side of the rear fork fixing base, an output shaft is rotationally connected between the power rear fork shell and the supporting rear fork, a motor cavity is arranged on the power rear fork shell, a gear cavity is formed in a side of the motor cavity proximal to the output shaft, a driving motor is arranged in the motor cavity, a driving gear shaft and a driven gear meshed with each other are arranged in the gear cavity, the driving gear shaft and the driven gear are in reducing transmission, the driving gear shaft is connected to a motor shaft on the driving motor, one end of the output shaft extends into the gear cavity, and the driven gear is connected to the output shaft, so that the power transmission path is shorter, the efficiency is higher, and the sealing performance is good. The volume of a battery is not sacrificed, and a larger battery may be placed to increase the endurance mileage. Problems of performance deterioration and waterproofness due to the increase of rotational inertia caused by a wheel hub motor are reduced.

## Description

### Technical Field

The utility model belongs to the technical field of motorcycle electric drive, and in particular, relates to a power rear fork driving system for a pure electric two-wheeled motorcycle.

### Background

In the field of motorcycle electric drive, at present, common structural forms include a wheel hub motor, a mid-drive motor and the like. When the wheel hub motor is used for driving, although the wheel hub motor is simple in structure, the wheel hub motor is heavy, large in rotational inertia, and low in efficiency, which not only affects the operating and controlling performance of the finished motorcycle, but also increases the material cost. Moreover, the waterproof sealing performance of the wheel hub motor is poorer. When the mid-drive motor is used for driving, the transmission path is longer, the finite space of the motorcycle will be occupied, and the volume of the battery is sacrificed, so that the endurance mileage of the finished motorcycle is reduced.

At present, a side motor driving mode is also used, but its transmission system is complex in structure, which affects the transmission efficiency and the manufacturing cost.

### Summary

Aiming at deficiencies in the prior art, the utility model provides a power rear fork driving system for a pure electric two-wheeled motorcycle, which is higher in power transmission efficiency, smaller in occupied volume, stable in performance, and good in waterproofness.

To achieve the above objective, the utility model provides the following technical solution: A power rear fork driving system for a pure electric two-wheeled motorcycle includes a rear fork fixing base, where one side of the rear fork fixing base is connected to a frame, a power rear fork shell and a supporting rear fork are respectively arranged at both ends of the other side of the rear fork fixing base, an output shaft is rotationally connected between the power rear fork shell and the supporting rear fork, a motor cavity is arranged on the power rear fork shell, a gear cavity is formed in a side of the motor cavity proximal to the output shaft, a driving motor is arranged in the motor cavity, a driving gear shaft and a driven gear meshed with each other are arranged in the gear cavity, the driving gear shaft and the driven gear are in reducing transmission, the driving gear shaft is connected to a motor shaft on the driving motor, one end of the output shaft extends into the gear cavity, and the driven gear is connected to the output shaft.

Further, a sealing hole is formed between the motor cavity and the gear cavity, an end of the motor shaft extends into the sealing hole, and an oil seal is arranged between the end of the motor shaft and the sealing hole.

Further, a protruding first bearing hole is formed in an inner wall of the motor cavity proximal to the gear cavity, the first bearing hole corresponds to the sealing hole, and a motor supporting bearing is arranged between the motor shaft and the first bearing hole.

Further, the end of the output shaft extending into the gear cavity is proximal to the inner wall of the gear cavity, a protruding second bearing hole is formed in the inner wall of the gear cavity, the end of the output shaft extends into the second bearing hole, and an output supporting bearing is arranged between the end of the output shaft and the second bearing hole.

Further, the driven gear is connected to the end of the output shaft extending into the gear cavity, a retaining ring is arranged on the end of the output shaft, and the retaining ring contacts with the driven gear.

Further, the power rear fork shell and the rear fork fixing base are fixedly connected through bolts and nuts.

Further, a plurality of reinforcing ribs are arranged on both the power rear fork shell and the supporting rear fork.

Compared with the prior art, the utility model has the following beneficial effects: the driving motor in the motor cavity is started to drive the driving gear shaft to rotate, then drive the driven gear to rotate, and finally, drive the output shaft to rotate, so as to realize drive of the driving wheel. Since both the driving motor and the transmission system are built-in the power rear fork shell on one side of the driving wheel, so that the power transmission path is shorter, the efficiency is higher, and the sealing performance is good. The volume of a battery is not sacrificed, and a larger battery may be placed to increase the endurance mileage. Problems of performance deterioration and waterproofness due to the increase of rotational inertia caused by the wheel hub motor are reduced.

### Brief Description of Figures

FIG. 1 is a schematic structural diagram of an appearance of a power rear fork driving system for a pure electric two-wheeled motorcycle according to the utility model;
FIG. 2 is a schematic internal structural diagram of a power rear fork driving system for a pure electric two-wheeled motorcycle in embodiment I of the utility model; and
FIG. 3 is a schematic internal structural diagram of a power rear fork driving system for a pure electric two-wheeled motorcycle in embodiment II of the utility model.

Reference numerals: 1-rear fork fixing base; 2-power rear fork shell; 3-supporting rear fork; 4-output shaft; 5-motor cavity; 6-gear cavity; 7-driving motor; 8-driving gear shaft; 9-driven gear; 10-sealing hole; 11-oil seal; 12-first bearing hole; 13-motor supporting bearing; 14-second bearing hole; 15-output supporting bearing; 16-retaining ring; 17-motor shaft.

### Detailed Description

In the description of the utility model, it should be noted that the terms "center," "transverse (X)," "longitudinal (Y)," "vertical (Z)," "length," "width," "thickness," "above," "below," "front," "back," "left," "right," "vertical," "horizontal," "top," "bottom," "inner," "outer," "clockwise," "counterclockwise," and the like indicate azimuthal or positional relations on the basis of those shown in the drawings are only for ease of description of the utility model and for simplicity of description, and are not intended to indicate or imply that the referenced device or element must have a particular azimuth and be constructed and operated in a particular azimuth, and thus, the terms used in the utility model may not be construed as a limitation on a specific protection scope of the utility model.

In addition, the terms "first" and "second" are merely used for a description purpose rather than being construed as indicating or implying relative importance or implicitly indicating the quantity of indicated technical features. Thus, features defining "first" and "second" may expressively or implicitly include at least one feature. In the description of the utility model, unless otherwise specified, "a plurality of" and "several" means at least two, for example, two or more than two.

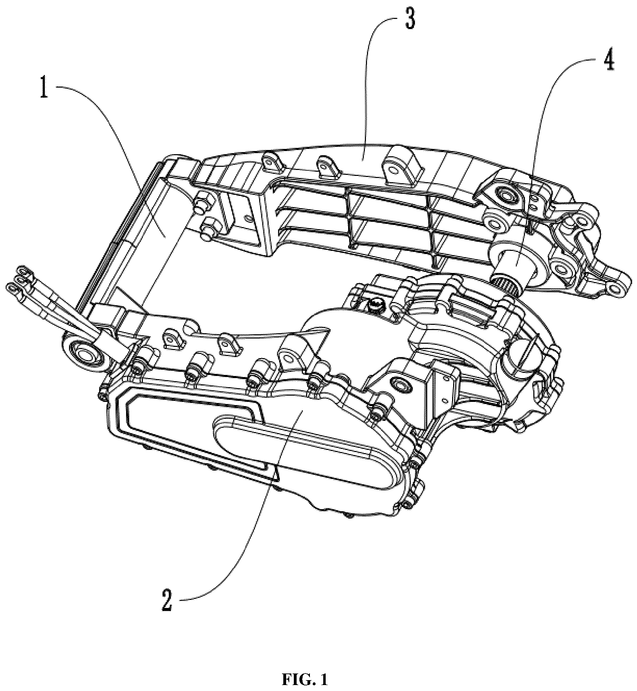

Referring to FIG. 1 to FIG. 3, the utility model is further described.

### Embodiment I:

A power rear fork driving system for a pure electric two-wheeled motorcycle includes a rear fork fixing base 1. One side of the rear fork fixing base 1 is connected to a frame. A power rear fork shell 2 and a supporting rear fork 3 are respectively arranged at both ends of the other side of the rear fork fixing base. An output shaft 4 is rotationally connected between the power rear fork shell 2 and the supporting rear fork 3. A motor cavity 5 is arranged on the power rear fork shell 2. A gear cavity 6 is formed in a side of the motor cavity 5 proximal to the output shaft 4. A driving motor 7 is arranged in the motor cavity 5. A driving gear shaft 8 and a driven gear 9 meshed with each other are arranged in the gear cavity 6. The driving gear shaft 8 and the driven gear 9 are in reducing transmission. The driving gear shaft 8 is connected to a motor shaft on the driving motor 7. One end of the output shaft 4 extends into the gear cavity 6. The driven gear 9 is connected to the output shaft 4.

Specifically, a driving wheel is arranged on the output shaft 4.

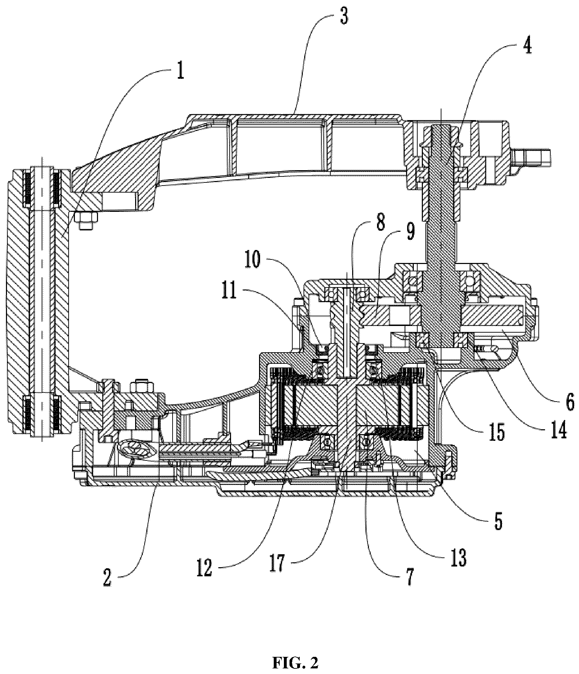

As shown in FIG. 1 and FIG. 2, the driving motor 7 in the motor cavity 5 is started to drive the driving gear shaft 8 to rotate, then drive the driven gear 9 to rotate, and finally, drive the output shaft 4 to rotate, so as to realize drive of the driving wheel. Since both the driving motor 7 and the transmission system are built-in the power rear fork shell on one side of the driving wheel, the power transmission path is shorter, the efficiency is higher, and the sealing performance is good. The volume of a battery is not sacrificed, and a larger battery may be placed to increase the endurance mileage. Problems of performance deterioration and waterproofness due to the increase of rotational inertia caused by the wheel hub motor are reduced.

As shown in FIG. 2, in this embodiment, preferably, a sealing hole 10 is formed between the motor cavity 5 and the gear cavity 6. An end of the motor shaft extends into the sealing hole 10. An oil seal 11 is arranged between the end of the motor shaft and the sealing hole 10. The oil seal 11 prevents lubricating oil in the gear cavity 6 from flowing into the motor cavity 5.

As shown in FIG. 2, in this embodiment, preferably, a protruding first bearing hole 12 is formed in an inner wall of the motor cavity 5 proximal to the gear cavity 6. The first bearing hole 12 corresponds to the sealing hole 10. A motor supporting bearing 13 is arranged between the motor shaft and the first bearing hole 12, so that both ends of the motor shaft and both ends of the driving gear shaft are supported by bearings, and the motor shaft and the driving gear shaft rotate more stably.

Specifically, a bearing oil deflector ring corresponding to the motor supporting bearing 13 is arranged in the first bearing hole 12, and the bearing oil deflector ring is located on a side of the motor supporting bearing 13 facing the oil seal 11.

As shown in FIG. 2, in this embodiment, preferably, the end of the output shaft extending into the gear cavity 6 is proximal to the inner wall of the gear cavity 6. A protruding second bearing hole 14 is formed in the inner wall of the gear cavity 6. The end of the output shaft 4 extends into the second bearing hole 14. An output supporting bearing 15 is arranged between the end of the output shaft 4 and the second bearing hole 14, so that the output shaft 4 on each side of the driven gear 9 is supported by a bearing, and the driven gear 9 rotates more stably.

As shown in FIG. 1 and FIG. 2, in this embodiment, preferably, the power rear fork shell 2 and the rear fork fixing base 1 are fixedly connected through bolts and nuts, which facilitates disassembly and assembly of the driving wheel.

As shown in FIG. 1 and FIG. 2, in this embodiment, preferably, a plurality of reinforcing ribs are arranged on both the power rear fork shell 2 and the supporting rear fork 3.

### Embodiment II:

A power rear fork driving system for a pure electric two-wheeled motorcycle includes a rear fork fixing base 1. One side of the rear fork fixing base 1 is connected to a frame. A power rear fork shell 2 and a supporting rear fork 3 are respectively arranged at both ends of the other side of the rear fork fixing base. An output shaft 4 is rotationally connected between the power rear fork shell 2 and the supporting rear fork 3. A motor cavity 5 is arranged on the power rear fork shell 2. A gear cavity 6 is formed in a side of the motor cavity 5 proximal to the output shaft 4. A driving motor 7 is arranged in the motor cavity 5. A driving gear shaft 8 and a driven gear 9 meshed with each other are arranged in the gear cavity 6. The driving gear shaft 8 and the driven gear 9 are in reducing transmission. The driving gear shaft 8 is connected to a motor shaft on the driving motor 7. One end of the output shaft 4 extends into the gear cavity 6. The driven gear 9 is connected to the output shaft 4.

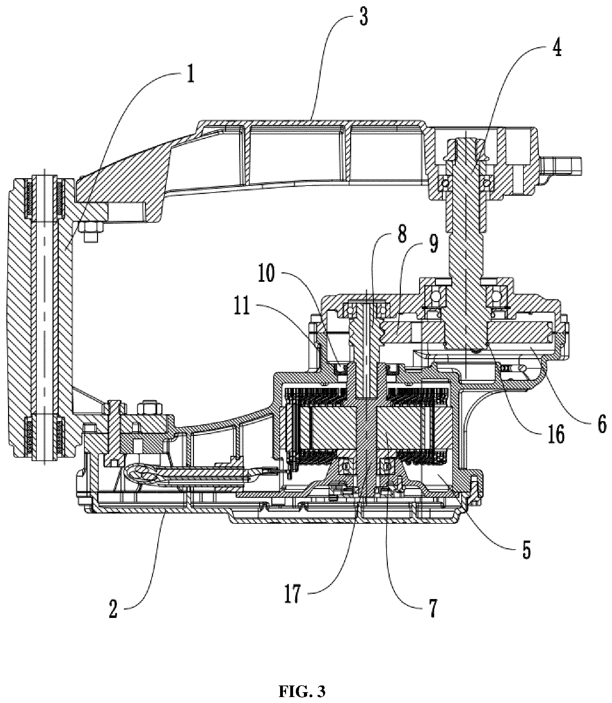

As shown in FIG. 1 and FIG. 3, the driving motor 7 in the motor cavity 5 is started to drive the driving gear shaft 8 to rotate, then drive the driven gear 9 to rotate, and finally, drive the output shaft 4 to rotate, so as to realize drive of the driving wheel. Since both the driving motor 7 and the transmission system are built-in the power rear fork shell on one side of the driving wheel, so that the power transmission path is shorter, the efficiency is higher, and the sealing performance is good. The volume of a battery is not sacrificed, and a larger battery may be placed to increase the endurance mileage. Problems of performance deterioration and waterproofness due to the increase of rotational inertia caused by the wheel hub motor are reduced.

As shown in FIG. 3, in this embodiment, preferably, a sealing hole 10 is formed between the motor cavity 5 and the gear cavity 6. An end of the motor shaft extends into the sealing hole 10. An oil seal 11 is arranged between the end of the motor shaft and the sealing hole 10. The oil seal 11 prevents lubricating oil in the gear cavity 6 from flowing into the motor cavity 5.

As shown in FIG. 3, in this embodiment, preferably, the driven gear 9 is connected to the end of the output shaft 4 extending into the gear cavity 6. A retaining ring is arranged on the end of the output shaft 4. The retaining ring contacts with the driven gear 9 to prevent the driven gear 9 from falling off.

As shown in FIG. 3, in this embodiment, the first bearing hole 12 and the second bearing hole 14 in the original embodiment I are removed, and the corresponding bearings in the bearing holes is removed. The overall driving system is only supported by 4 bearings, so that the driving system is simple in structure and lower in manufacturing cost.

As shown in FIG. 1 and FIG. 3, in this embodiment, preferably, the power rear fork shell 2 and the rear fork fixing base 1 are fixedly connected through bolts and nuts, which facilitates disassembly and assembly of the driving wheel.

As shown in FIG. 1 and FIG. 3, in this embodiment, preferably, a plurality of reinforcing ribs are arranged on both the power rear fork shell 2 and the supporting rear fork 3.

The above described is merely preferred embodiments of the utility model. The protection scope of the utility model is not limited to the above embodiments, and technical solutions belonging to the concept of the utility model all should fall within the protection scope of the utility model. It should be noted that those of ordinary skill in the art may make several improvements and embellishments without departing from the principle of the utility model, and those improvements and embellishments shall also be regarded within the protection scope of the utility model.

## Claims

1. A power rear fork driving system for a pure electric two-wheeled motorcycle, comprising a rear fork fixing base, wherein one side of the rear fork fixing base is connected to a frame, a power rear fork shell and a supporting rear fork are respectively arranged at both ends of the other side of the rear fork fixing base, an output shaft is rotationally connected between the power rear fork shell and the supporting rear fork, a motor cavity is arranged on the power rear fork shell, a gear cavity is formed in a side of the motor cavity proximal to the output shaft, a driving motor is arranged in the motor cavity, a driving gear shaft and a driven gear meshed with each other are arranged in the gear cavity, the driving gear shaft and the driven gear are in reducing transmission, the driving gear shaft is connected to a motor shaft on the driving motor, one end of the output shaft extends into the gear cavity, and the driven gear is connected to the output shaft.

2. The power rear fork driving system for a pure electric two-wheeled motorcycle according to claim 1, wherein a sealing hole is formed between the motor cavity and the gear cavity, an end of the motor shaft extends into the sealing hole, and an oil seal is arranged between the end of the motor shaft and the sealing hole.

3. The power rear fork driving system for a pure electric two-wheeled motorcycle according to claim 2, wherein a protruding first bearing hole is formed in an inner wall of the motor cavity proximal to the gear cavity, the first bearing hole corresponds to the sealing hole, and a motor supporting bearing is arranged between the motor shaft and the first bearing hole.

4. The power rear fork driving system for a pure electric two-wheeled motorcycle according to claim 3, wherein the end of the output shaft extending into the gear cavity is proximal to the inner wall of the gear cavity, a protruding second bearing hole is formed in the inner wall of the gear cavity, the end of the output shaft extends into the second bearing hole, and an output supporting bearing is arranged between the end of the output shaft and the second bearing hole.

5. The power rear fork driving system for a pure electric two-wheeled motorcycle according to claim 3, wherein the driven gear is connected to the end of the output shaft extending into the gear cavity, a retaining ring is arranged on the end of the output shaft, and the retaining ring contacts with the driven gear.

6. The power rear fork driving system for a pure electric two-wheeled motorcycle according to any one of claims 1 to 5, wherein the power rear fork shell and the rear fork fixing base are fixedly connected through bolts and nuts.

7. The power rear fork driving system for a pure electric two-wheeled motorcycle according to claim 6, wherein a plurality of reinforcing ribs are arranged on both the power rear fork shell and the supporting rear fork.
